# EUROPEAN PATENT SPECIFICATION

(11) **EP 1 391 375 B1**
(45) Date of publication and mention of the grant of the patent: **02.11.2005**
(21) Application number: 03018942.7
(22) Date of filing: 20.08.2003
(51) Int. Cl.: B62M 25/08, G08C 19/20

(54) **Power stabilizing apparatus for a bicycle electrical component**
Vorrichtung zur Leistungsstabilisierung für elektrische Fahrradkomponenten
Dispositif de stabilisation de la puissance pour composants électriques de bicyclette

(30) Priority: 20.08.2002 JP 2002239245
(43) Date of publication of application: 25.02.2004
(73) Proprietor: SHIMANO INC., Osaka 590-8577 (JP)
(72) Inventor: Oohara, Kouji, Sakai-shi Osaka (JP)
(74) Representative: Grosse, Wolfgang

(56) References cited:
- EP-A- 0 650 031
- EP-A- 1 103 454
- EP-A- 1 216 916
- EP-A- 1 244 192
- WO-A-81/01274
- DE-A- 2 813 402
- US-A- 4 609 982
- US-A- 5 247 430
- PATENT ABSTRACTS OF JAPAN vol. 1995, no. 11, 26 December 1995 (1995-12-26) & JP 07 229909 A (SANYO ELECTRIC CO LTD), 29 August 1995 (1995-08-29)

## Description

### BACKGROUND OF THE INVENTION

The present invention is directed to bicycles and, more particularly, to an apparatus for stabilizing power provided to a bicycle electrical component.

In recent years, bicycles have been equipped with a variety of electrical components. Such electrical components include cycle computers for displaying a travel status (e.g., speed) of the bicycle, and controllers for automatically changing the gears of a gear-shift mechanism. Conventionally, power has been supplied to these types of electrical components from a battery, wherein a power line is connected from the battery to the electrical component. Also, a control signal line may be connected between the electrical component and an associated sensor or controller for exchanging signals. Document WO 8101274 discloses a bicycle electrical control circuit according to the preamble of claim 1. As the number of electrical components increase, the number of power and control signal lines increase accordingly. In the case of a bicycle, since wires other than these power and control signal lines are already attached to the frame and handlebar for brake and gear-shift operations, further increasing the number of wires is not desirable.

Technology for communicating power and control signals using integrated or composite signals has been developed to reduce the number of wires required between the various electrical components. Such signals sometimes take the form of pulsed signals wherein the signal is repetitively turned on and off. Some electrical components operate using both the power and control components of the signals, whereas other electrical components may operate using only the power component of the signals. Unfortunately, when power and control signals are communicated using such pulsed signals, there is a risk that an electrical component that does not use the control component of the signals will not function properly. For example, an illumination device may flicker as a result of the ON/OFF nature of the pulsed signals.

### SUMMARY OF THE INVENTION

The present invention is directed to various features of an apparatus for providing power and control signals to a plurality of bicycle components. In one embodiment, there is a bicycle electrical control circuit and an assembly providing power and control signals to a plurality of bicycle components according to the features of claim 1 and 9 of the invention. Additional inventive features will become apparent from the description below, and such features alone or in combination with the above features may form the basis of further inventions as recited in the claims and their equivalents.

### BRIEF DESCRIPTION OF THE DRAWINGS

Fig. 1 is a side view of a bicycle including a circuit that provides power and control signals to a plurality of bicycle components;
Fig. 2 is an enlarged oblique view of the bicycle handlebar assembly;
Fig. 3 is a block diagram of a particular embodiment of a circuit that provides power and control signals to a plurality of bicycle components;
Fig. 4 is a cross sectional view of a cycle computer display and associated backlight; and
Fig. 5 is a schematic diagram of a particular embodiment of a power stabilizing circuit.

### DETAILED DESCRIPTION OF THE EMBODIMENTS

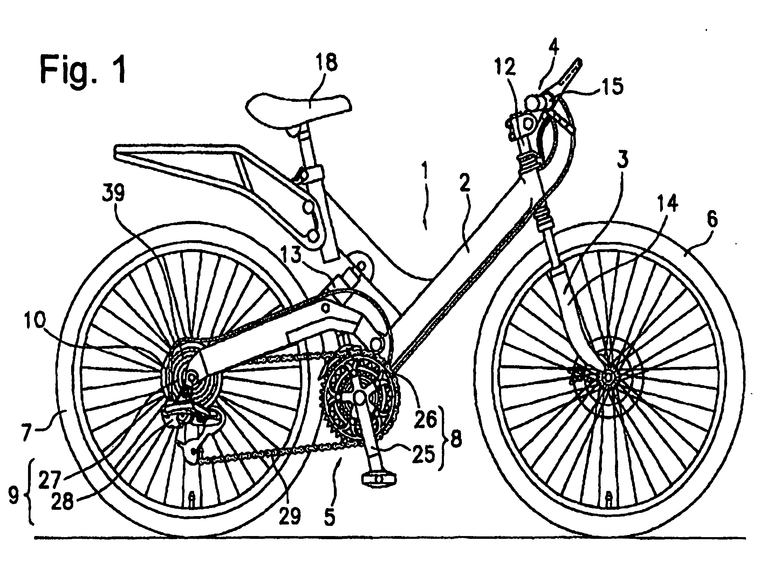

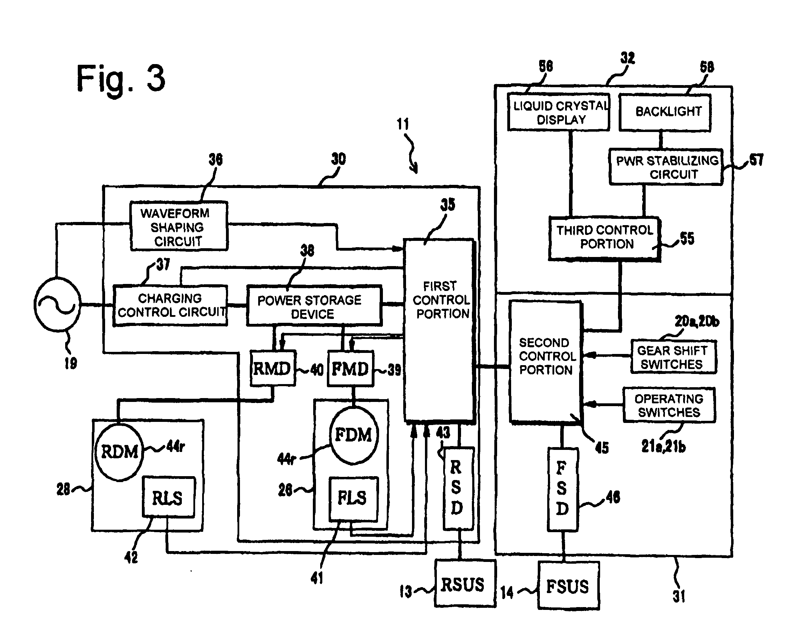

Fig. 1 is a side view of a bicycle including a circuit that provides power and control signals to a plurality of bicycle components. In this embodiment, the bicycle is a mountain bicycle comprising a frame 1 having a frame body 2; a front fork 3 mounted to the front of frame body 2 for rotation around an inclined axis; a front wheel 6 rotatably mounted to front fork 3; a handlebar assembly 4 mounted to the upper portion of front fork 3; a rear wheel 7 rotatably mounted to the rear portion of frame body 2, a driving portion 5 comprising front and rear gear-shift mechanisms 8 and 9; and a controller 11 (Fig. 3) for controlling the front and rear gear-shift mechanisms 8 and 9. A front suspension 14 is mounted to front fork 3, a rear suspension 13 is mounted to the rear of frame body 2, and a saddle 18 is mounted to the middle of frame body 2.

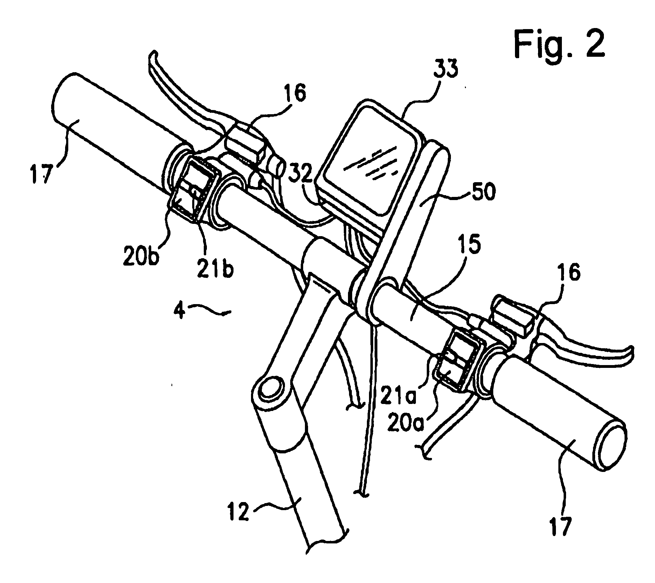

As shown in Fig. 2, handlebar assembly 4 comprises a handle stem 12 and a handlebar 15, wherein handle stem 12 is fastened to the upper portion of the front fork 3, and handlebar 15 is fastened to handle stem 12. Brake levers 16 and grips 17 are mounted at opposite ends of the handlebar 15. Gear-shift switches 20a and 20b are provided for carrying out manual gear-shift operations of the front and rear gear-shift mechanisms 8 and 9. An operating switch 21 a is provided for switching between an automatic mode and a manual mode of operation, and an operating switch 21b is provided for manually adjusting the stiffness of the front and rear suspensions 13 and 14.

Front gear-shift mechanism 8 comprises a gear crank 25 rotatably mounted at a bottom bracket portion of frame body 2. A plurality of front sprockets (e.g., three sprockets) are mounted to gear crank 25, and a front derailleur 26 is mounted to frame body 2 in close proximity to gear crank 25 for switching a chain 29 among the plurality of front sprockets. Rear gear-shift mechanism 9 comprises a plurality of rear sprockets 27 (e.g., nine sprockets), and a rear derailleur 28 is mounted to the rear of frame body 2 for switching chain 29 among the plurality of rear sprockets 27.

A dynamo hub 10 is mounted to rear wheel 7. Dynamo hub 10 is structured to support a brake disk (not shown), and it includes a freewheel assembly to which the plurality of rear sprockets 27 are mounted. An alternating current generator 19 (Fig. 3) is mounted inside hub 10 for generating power in response to the rotation of the rear wheel 7.

Controller 11 manually controls the front and rear gear-shift mechanisms 8 and 9 and front and rear suspensions 13 and 14 in response to the operation of the gear-shift switches 20a and 20b and operating switches 21a and 21b. Controller 11 also may automatically control the front and rear gear-shift mechanisms 8 and 9 and front and rear suspensions 13 and 14 in accordance with the speed of the bicycle. As shown in Fig. 3, controller 11 has a first control unit 30, a second control unit 31, and a third control unit 32. First control unit 30 may be integrally assembled with front derailleur 26. First control unit 30 is connected to and is powered by the alternating current generator 19, and it powers and controls the front and rear derailleurs 26 and 28 and rear suspension 13. Since first control unit 30 is provided close to the alternating current generator 19, a shorter power cable may be used, thus increasing the efficiency of control signal exchanges and power supply.

The first control unit 30 includes a first control portion 35 in the form of a microcomputer (an example of a power / control circuit), a waveform-shaping circuit 36 (an example of a control circuit) for generating a speed signal derived from the output of the alternating current generator 19, a charging control circuit 37, a power storage device 38 (an example of a power circuit), a front derailleur motor driver (FMD) 39, a rear derailleur motor driver (RMD) 40, a front derailleur 26 operating location (position) sensor (FLS) 41, a rear derailleur 28 operating location (position) sensor (RLS) 42, and a rear suspension motor driver (RSD) 43. The charging control circuit 37 rectifies the power output from the alternating current generator 19 and produces direct current power. The power storage device 38 may comprise a large-capacity capacitor, for example, for storing the direct current power produced by charging control circuit 37. If desired, the power storage device 38 may comprise a secondary storage battery such as a nickel cadmium battery, lithium ion battery, nickel hydride battery, etc. instead of a capacitor. The power stored in the power storage device 38 is communicated to the first control portion 35 and to the motor drivers 39, 40 and 43. The motor drivers 39, 40 and 43 output driving signals for driving motors 44f and 44r used to control derailleurs 26 and 28 and a motor (not shown in the figure) used to control the rear suspension 13 in accordance with control signals from first control portion 35.

The first control unit 30 also supplies power and control signals to the second control unit 31 and third control unit 32. More specifically, the first control unit 30 provides composite power/control signals that are pulsed ON and OFF (thus functioning as a power/control circuit). The control signals may include the speed signals from waveform-shaping circuit 36. The second control unit 31 and third control unit 32 derive power from the power components of the composite signals and are controlled according to control signal components of the composite signals.

The second control unit 31 is mounted via a bracket 50 (Fig. 2) to the handlebar 15 of the handlebar assembly 4. The second control unit 31 comprises gear-shift switches 20a and 20b, operating switches 21a and 21b, a second control portion 45 in the form of a microcomputer, and a front suspension motor driver (FSD) 46. The second control unit 31 transfers the operating data of switches 20a, 20b, 21a and 21b to the first control unit 30. In automatic mode, second control portion 45 adjusts the stiffness of the front suspension 14 in accordance with a control signal sent from the first control unit 30 based on bicycle speed. In manual mode, second control portion 45 adjusts the stiffness of the front suspension 14 in accordance with the operation of the operating switch 21b.

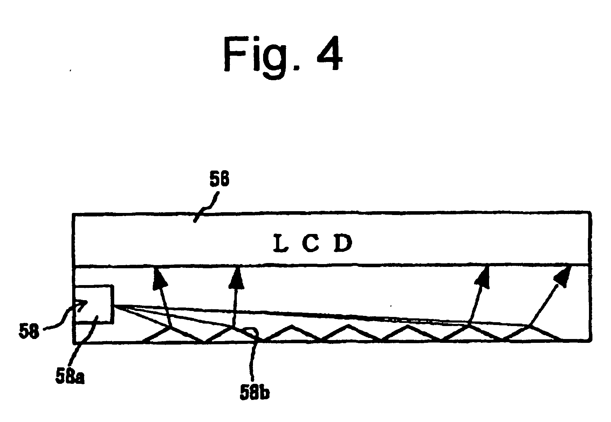

The third control unit 32 is a so-called cycle computer, and it is detachably mounted to the second control unit 31. The third control unit 32 has a third control portion 55 in the form of a microcomputer, a liquid crystal display portion 56, and a backlight 58. Backlight 58 is coupled to third control portion 55 through a power stabilizing circuit 57. The liquid crystal display portion 56 is capable of displaying various data such as speed, cadence, travel distance, gear-shift location, suspension status and so forth, and it is illuminated by the backlight 58. As shown in Fig. 4, the backlight 58 is disposed on the opposite side of the display screen of the liquid crystal display portion 56. Backlight 58 comprises a light source such as an LED 58a, for example, and a diffused reflecting portion 58b for diffusing and reflecting the light of the LED 58a, thus illuminating the liquid crystal display portion 56.

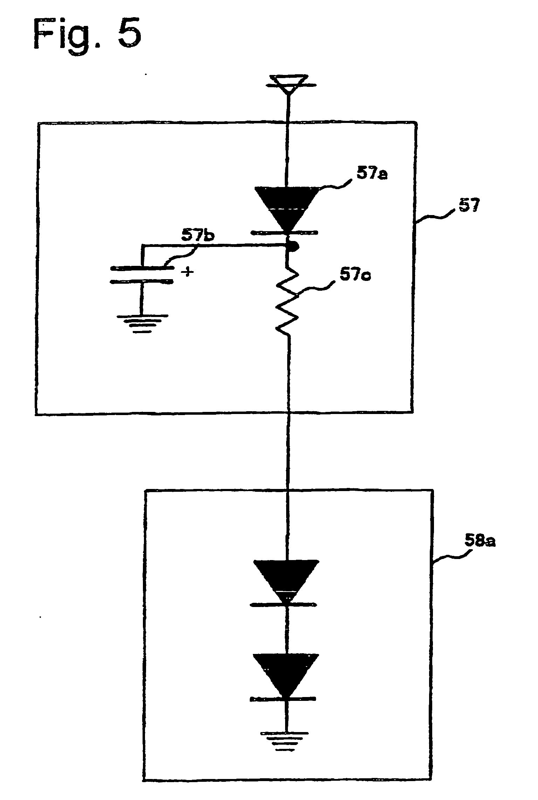

As shown in Fig. 5, the power stabilizing circuit 57 comprises a diode 57a (the anode of which is connected to the third control portion 55), a resistor 57c connected in series between diode 57a and LED 58a for regulating current supplied to LED 58a, and a capacitor 57b connected in parallel with the resistor 57c. One terminal of capacitor 57b is connected to the anode of diode 57a, and the other terminal of capacitor 57b is grounded. The diode 57a prevents reverse current when the capacitor 57b is being charged. The capacitor 57b stabilizes the voltage supplied to the LED 58a and lessens a voltage drop resulting from the pulsed ON/OFF nature of the control signal, even if it is the same large signal used to power and control the derailleur or motor drivers 39, 40, 43 or 46. This, in turn, minimizes or prevents flickering of the LED 58a.

In operation, the alternating current generator 19 of the dynamo hub 10 generates electric power when the bicycle is traveling, and the electric power is stored in the power storage device 38. Since the generator 19 is provided on the rear wheel 7, the power storage device 38 also may be charged by putting the bicycle on its stand and rotating the pedals if the charge produced by normal travel is insufficient. This is particularly helpful when adjusting the gear-shift mechanisms and setting the operations of the liquid crystal display portion 56.

When the bicycle speed either exceeds a predetermined threshold value or falls below a predetermined threshold value in automatic mode, a gear-shift operation is carried out. In this embodiment, the gear-shift operation is carried out with priority given to the rear derailleur 28. Furthermore, when the speed exceeds a predetermined speed, the stiffness of both suspensions 13 and 14 may be made stiffer. A pulsed composite power/control signal for controlling the liquid crystal display portion 56 or front suspension 14 is generated by the first control portion 35 and communicated to the second control portion 45 and to the third control portion 55. The composite power/control signal sent to the third control portion 55 is also sent to the backlight 58 via the power stabilizing circuit 57. The control portion of the composite signal does not control the backlight 58, but there is the danger that backlight 58 may be affected by the ON/OFF pulsed nature of the composite signal. However, the capacitor 57c is charged during the ON portion of the composite signal, and this charged power is supplied to the LED 58a of the backlight 58 during the OFF portion of the composite signal. Thus, the backlight 58 is not apt to flicker even when such a pulsed signal is used.

While the above is a description of various embodiments of inventive features, further modifications may be employed without departing from the spirit and scope of the present invention. For example, a backlight was given as an example of an electrical component that is powered by but not controlled by a composite power/control signal, but such an electrical component may comprise other electrical components for a bicycle such as, for example, a headlight or taillight, or some other lighted or non-lighted component. Although an alternating current generator which does not have to be periodically replaced was given as an example of a power source, a direct current power source such as a primary battery or a secondary battery also may be used as the power source to reduce weight. Although a dynamo hub was mounted to the rear wheel in the described embodiment, a dynamo hub may be mounted to the front wheel, or a rim dynamo may be provided to generate power by making contact with the rim of a wheel.

The size, shape, location or orientation of the various components may be changed as desired. Components that are shown directly connected or contacting each other may have intermediate structures disposed between them. The functions of one element may be performed by two, and vice versa. The structures and functions of one embodiment may be adopted in another embodiment. It is not necessary for all advantages to be present in a particular embodiment at the same time. Thus, the scope of the invention should not be limited by the specific structures disclosed or the apparent initial focus or emphasis on a particular structure or feature.

## Claims

1. A bicycle electrical control circuit that provides power and control signals to a plurality of bicycle components (58), wherein the circuit comprises:
a current source (19) that provides power;
a power circuit (38) that provides a power component for the plurality of bicycle components;
a control circuit (36) that provides a control signal component that controls at least one of the plurality of bicycle components; and
a power stabilizing circuit (57) coupled to at least one of the plurality of bicycle components (58),
**characterized in that**
the circuit further comprises a power/control circuit (35) coupled to the power circuit (38) and to the control circuit (36) and connected to the current source (19) through the power circuit (38);
wherein the power stabilizing circuit (57) is coupled the power/control circuit (35), the power/control circuit (35) provides a composite signal having the power component and the control signal component, and
the power stabilizing circuit (57) stabilizes the power component of the composite signal provided to at least one of the plurality of bicycle components (58).

2. The circuit according to claim 1 wherein the power stabilizing circuit (57) stabilizes a voltage provided to the at least one of the plurality of bicycle components.

3. The circuit according to claim 1 wherein the current source (19) is an alternating current source (19).

4. The circuit according to claim 3 wherein the power circuit is structured to provide power from a dynamo hub (10) mounted to one of a front wheel (6) or a rear wheel (7) of the bicycle.

5. The circuit according to claim 1 wherein the current source (19) is a direct current source.

6. The circuit according to claim 5 wherein the power circuit is structured to provide power derived from a battery (38).

7. The circuit according to one of the claims 1 or 6 wherein the control signal has a pulse component.

8. The circuit according to claim 7 wherein the control signal has an ON component and an OFF component.

9. An assembly comprising a bicycle electrical control circuit according to claim 1 and a plurality of bicycle components comprising a first electrical component and a second electrical component, wherein the first electrical component is controlled by the control signal component, and wherein the second electrical component is not controlled by the control signal component.

10. The circuit according to claim 9 wherein the power stabilizing circuit (57) stabilizes the power provided from the power component to the second electrical component (58).

11. The circuit according to claim 10 wherein the first electrical component comprises a liquid crystal display component (56) structured to display various data, and wherein the second electrical component comprises a backlight (58) that illuminates the liquid crystal display component (56).

12. The circuit according to claim 10 wherein the first electrical component comprises a gear shift driving component that drives a gear shift mechanism having a plurality of gear ratios.

13. The circuit according to claim 12 wherein the second electrical component comprises a light.

14. The circuit according to claim 10 wherein the power stabilizing circuit (57) stabilizes a voltage provided to the second electrical component.

15. The circuit according to claim 14 wherein the power stabilizing circuit (57) comprises a power storage device coupled in parallel with the second electrical component.

16. The circuit according to one of the claims 1 or 15 wherein the power storage device comprises a capacitor (57b).

17. The circuit according to claim 16 wherein the power stabilizing circuit (57) further comprises a diode (57a) coupled to prevent reverse current to the power circuit.

18. The circuit according to claim 15 wherein the power stabilizing circuit (57) further comprises a diode (57a) coupled to prevent reverse current to the power/control circuit.

## Patentansprüche

1. Elektrischer Fahrrad-Steuerschaltkreis, der an eine Mehrzahl von Fahrradkomponenten (58) Strom- und Steuersignale liefert, wobei der Schaltkreis aufweist:
eine Stromquelle (19), die Strom liefert;
einen Stromschaltkreis (38), der der Mehrzahl von Fahrradkomponenten eine Stromkomponente liefert;
einen Steuerschaltkreis (36), der eine Steuersignalkomponente liefert, die mindestens eine der Mehrzahl von Fahrradkomponenten steuert; und
einen stromstabilisierenden Schaltkreis (57), der mit mindestens einer der Mehrzahl von Fahrradkomponenten (58) gekoppelt ist,
**dadurch gekennzeichnet, dass**
der Schaltkreis darüber hinaus einen Strom-/Steuerschaltkreis (35) aufweist, der mit dem Stromschaltkreis (38) und dem Steuerschaltkreis (36) gekoppelt ist und mit der der Stromquelle (19) durch den Stromschaltkreis (38) verbunden ist;
wobei der stromstabilisierende Schaltkreis (57) mit dem Strom/Steuerschaltkreis (35) gekoppelt ist, der Strom-/Steuerschaltkreis (35) ein Summensignal liefert, das die Stromkomponente und die Steuersignalkomponente enthält, und
der stromstabilisierende Schaltkreis (57) die Stromkomponente des Summensignals, das an mindestens eine der Mehrzahl von Fahrradkomkomponenten (58) geliefert wird, stabilisiert.

2. Schaltkreis nach Anspruch 1, wobei der stromstabilisierende Schaltkreis (57) eine an mindestens eine der Mehrzahl der Fahrradkomponenten gelieferte Spannung stabilisiert.

3. Schaltkreis nach Anspruch 1, wobei die Stromquelle (19) eine Wechselstromquelle (19) ist..

4. Schaltkreis nach Anspruch 3, wobei die Stromschaltung ausgestaltet ist, um von einer Dynamonabe (10) Strom zu liefern, die an einem eines Vorderrads (6) oder eines Hinterrads (7) des Fahrrads angebracht ist.

5. Schaltkreis nach Anspruch 1, wobei die Stromquelle (19) eine Gleichstromquelle ist.

6. Schaltkreis nach Anspruch 5, wobei der Stromschaltkreis ausgestaltet ist, um von einer Batterie (38) gelieferten Strom zu liefern.

7. Schaltkreis nach einem der Ansprüche 1 oder 6, wobei das Steuersignal eine Pulskomponente aufweist.

8. Schaltkreis nach Anspruch 7, wobei das Steuersignal eine AN-Komponente und eien AUS-Komponente aufweist.

9. Einen elektrischen Steuerschaltkreis nach Anspruch 1 und eine Mehrzahl von Fahrradkomponenten umfassende Anordnung, die eine erste elektrische Komponente und eine zweite elektrische Komponente umfasst, wobei die erste elektrische Komponente durch die Steuersignalkomponente gesteuert wird und wobei die zweite elektrische Komponente nicht durch die Steuersignalkomponente gesteuert wird.

10. Schaltkreis nach Anspruch 9, wobei der stromstabilisierende Schaltkreis (57) den von der Stromkomponente an die zweite elektrische Komponente (58) gelieferten Strom stabilisiert.

11. Schaltkreis nach Anspruch 10, wobei die erste elektrische Komponente eine Flüssigkristallanzeigenkomponente (56) umfasst, die ausgestaltet ist, um verschiedene Daten anzuzeigen, und wobei die zweite elektrische Komponente eine Hinterleuchtung (58) umfasst, die die Flüssigkristallanzeigenkomponente (56) beleuchtet.

12. Schaltkreis nach Anspruch 10, wobei die erste elektrische Komponente eine Gangschaltungsantriebskomponente umfasst, die einen Gangschaltungsmechanismus antreibt, der eine Mehrzahl von Gangübersetzungsverhältnissen umfasst.

13. Schaltkreis nach Anspruch 12, wobei die zweite elektrische Komponente eine Lampe umfasst.

14. Schaltkreis nach Anspruch 10, wobei der stromstabilisierende Schaltkreis (57) eine an die zweite elektrische Komponente gelieferte Spannung stabilisiert.

15. Schaltkreis nach Anspruch 14, wobei der stromstabilisierende Schaltkreis (57) eine Stromspeichervorrichtung umfasst, die parallel zur zweiten elektrischen Komponente geschaltet ist.

16. Schaltkreis nach einem der Ansprüche 1 oder 15, wobei die Stromspeichervorrichtung einen Kondensator (57b) umfasst.

17. Schaltkreis nach Anspruch 16, wobei der stromstabilisierend Stromkreis (57) darüber hinaus eine Diode (57a) umfasst, die mit dem Stromschaltkreis gekoppelt ist, um einen Rückstrom zu verhindern.

18. Schaltkreis nach Anspruch 15, wobei der stromstabilisierende Schaltkreis (57) darüber hinaus eine Diode (57a) umfasst, die mit dem Strom/Steuerschaltrkeis gekoppelt ist, um einen Rückstrom zu verhindern.

## Revendications

1. Circuit de commande électrique de bicyclette qui fournit une puissance et des signaux de commande à une pluralité de composants (58) de bicyclette, dans lequel le circuit comprend :
une source de courant (19) qui fournit une puissance ;
un circuit (38) de puissance qui fournit un composant de puissance pour la pluralité des composants de bicyclette ;
un circuit (36) de commande qui fournit un composant de signaux de commande qui commande au moins un parmi la pluralité de composants de bicyclette ; et
un circuit (57) de stabilisation de puissance couplé à au moins un parmi la pluralité de composants (58) de bicyclette,
**caractérisé en ce que**
le circuit comprend en outre un circuit (35) de puissance/commande couplé au circuit (38) de puissance et au circuit (36) de commande et raccordé à la source (19) de courant au travers du circuit (38) de puissance ;
dans lequel le circuit (57) de stabilisation de puissance est couplé au circuit (35) de puissance/commande, le circuit (35) de puissance/commande fournit un signal composite ayant le composant de puissance et le composant de signaux de commande, et
le circuit (57) de stabilisation de puissance stabilise le composant de puissance du signal composite fourni à au moins un parmi la pluralité des composants (58) de bicyclette.

2. Circuit selon la revendication 1, dans lequel le circuit (57) de stabilisation de puissance stabilise une tension fournie au au moins un parmi la pluralité des composants de bicyclette.

3. Circuit selon la revendication 1, dans lequel la source (19) de courant est une source (19) de courant alternatif.

4. Circuit selon la revendication 3, dans lequel le circuit de puissance est structuré pour fournir une puissance à partir d'un noyau (10) de dynamo monté sur l'une parmi une roue avant (6) ou une roue arrière (7) de la bicyclette.

5. Circuit selon la revendication 1, dans lequel la source (19) de courant est une source de courant continu.

6. Circuit selon la revendication 5, dans lequel le circuit de puissance est structuré pour fournir une puissance dérivée d'une batterie (38).

7. Circuit selon l'une quelconque des revendications 1 à 6, dans lequel le signal de commande a un composant d'impulsions.

8. Circuit selon la revendication 7, dans lequel le signal de commande a un composant MARCHE et un composant ARRET.

9. Assemblage comprenant un circuit de commande électrique de bicyclette selon la revendication 1 et une pluralité de composants de bicyclette comprenant un premier composant électrique et un second composant électrique, dans lequel le premier composant électrique est commandé par le composant de signaux de commande, et dans lequel le second composant électrique n'est pas commandé par le composant de signaux de commande.

10. Circuit selon la revendication 9, dans lequel le circuit (57) de stabilisation de puissance stabilise la puissance fournie depuis le composant de puissance jusqu'au second composant (58) électrique.

11. Circuit selon la revendication 10, dans lequel le premier composant électrique comprend un composant (56) d'affichage à cristaux liquides structuré pour afficher diverses données, et dans lequel le second composant électrique comprend un rétroéclairage (58) qui illumine le composant (56) d'affichage à cristaux liquides.

12. Circuit selon la revendication 10, dans lequel le premier composant électrique comprend un composant d'entraînement de changement de vitesses qui entraîne un mécanisme de changement de vitesses ayant une pluralité de rapports de vitesses.

13. Circuit selon la revendication 12, dans lequel le second composant électrique comprend une lumière.

14. Circuit selon la revendication 10, dans lequel le circuit (57) de stabilisation de puissance stabilise une tension fournie au second composant électrique.

15. Circuit selon la revendication 14, dans lequel le circuit (57) de stabilisation de puissance comprend un dispositif de stockage de puissance couplé en parallèle avec le second composant électrique.

16. Circuit selon l'une quelconque des revendications 1 à 15, dans lequel le dispositif de stockage de puissance comprend un condensateur (57b).

17. Circuit selon la revendication 16, dans lequel le circuit (57) de stabilisation de puissance comprend en outre une diode (57a) couplée pour empêcher un courant inverse jusqu'au circuit de puissance.

18. Circuit selon la revendication 15, dans lequel le circuit (57) de stabilisation de puissance comprend en outre une diode (57a) couplée pour empêcher un courant inverse jusqu'au circuit de puissance/commande.
